# EUROPEAN PATENT SPECIFICATION

(11) **EP 2 236 873 B1**
(45) Date of publication and mention of the grant of the patent: **16.05.2012**
(21) Application number: 09425124.6
(22) Date of filing: 31.03.2009
(51) Int. Cl.: F16K 7/04

(54) **Adjustment spring device for a pinch solenoid valve**
Justierfedervorrichtung für ein Schlauchklemm-Magnetventil
Dispositif ressort de réglage pour pincer l'électrovanne

(43) Date of publication of application: 06.10.2010
(73) Proprietor: Ode S.r.l., 23823 Colico (LC) (IT)
(72) Inventor: Mazzoletti, Angelo, 23823 Colico (LC) (IT)
(74) Representative: Riccardi, Sergio

(56) References cited:
- EP-B- 1 664 600
- US-A- 2 726 019
- US-A- 4 921 206
- US-A1- 2001 019 117

## Description

The present invention relates to a pinch solenoid valve, more particularly, to a pinch solenoid valve provided with a adjustment spring.

A pinch solenoid valve is a conventional solenoid valve adapted to engage a tube section by a pinch member actuated by the plunger of said solenoid valve. Such valve is particularly useful for adjusting the flow rate of fluids to be prevented from every kind of contamination, also comprising a thermal contamination. Therefore the flow interception has to be achieved externally, in respect of the tube wherein said fluids flow, by the aforementioned pinch member thus avoiding any contact of the fluid with other parts within the hydraulic circuit or with the atmosphere.

However the current pinch solenoid valves known in the art have the pinch member directly connected to the plunger of the solenoid valve and, therefore, the load applied onto the pinch member in order to reduce or stop the flow of the fluid only depends on the magnetic field force of the solenoid, in turn, depending on the current supplied. Such configuration is not able to assure a known and constant pinch load applied to the tube section thus resulting in an inaccurate closing of the tube section.

US 2,726,019 granted to James A. Moran discloses a dispensing solenoid valve suitable for regulating flow of fluids which have to be prevented from contacts with not sterilized parts. The dispensing solenoid valve is conveniently provided with means entirely external to said tube thus avoiding sterilization of the solenoid valve parts while dispensing said fluids. However the disclosed solenoid valve can suffers from variable resilience properties different tubes may have or a given tube may have during its usage due to, for example, varying temperature of the fluid to be dispensed.

US 2001/0019117 granted to Reto Schoeb discloses a clamping apparatus for clamping off a hose in a fluid system for biological liquids, in particular blood, and comprising a closing member, a permanent magnetic holding device arranged so that it can hold the closing member against a force in two different stable equilibrium positions. Said force is applied by an adjustably loaded spring system. However adjusting of the spring system is not automatically provided but it requires an operator every time a hose has to be replaced.

US 4,921,206 granted to Dunstan Harvey *et al*. discloses a solenoid operated pinch valve including a housing, a hollow moulded body, a plunger accommodated within a solenoid coil assembly for axial movement relative thereto. A pair of inflexible arms extending from the body define a passage for receiving a conduit across the path of movement of said plunger; a spring is also provided for biasing the plunger against the flexible conduit to compress same closed, the solenoid coil assembly being energizable to move the plunger linearly against said bias by causing the plunger to pull the conduit open.

EP 1 664 600 granted to Dilled Joseph C. discloses a control valve including an elastomeric flow tube, a plunger having first and second ends, and a pinch member connected to the first end of the plunger. The pinch member is situated adjacent the flow tube. A reference surface is positioned generally opposite the pinch member such that the elastomeric tube is squeezable between the pinch member and the reference surface to control fluid flow through the flow tube. A first guide spring is situated between the pinch member and the first end of the plunger, and a second guide spring is situated adjacent the second end of the plunger.

Main object of the present invention is, therefore, to provide an adjustment spring device able to assure a constant and known load applied to the pinch member for an accurate closing of the tube section, that is an exact stop of the fluid flow.

Another object of the present invention is to provide an adjustment spring device able to eliminate all the clearances within the parts of the solenoid valve.

A detailed description of the adjustment spring device according to a preferred embodiment of the present invention will be now provided with reference to the annexed drawing, wherein:

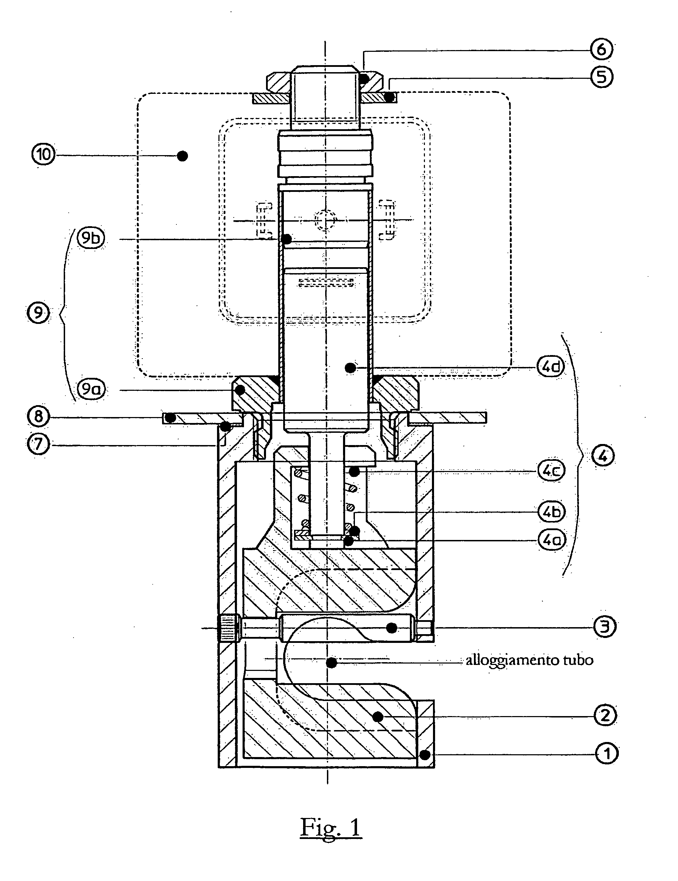

fig. 1 is a cross sectional view of the pinch solenoid valve provided with the device of the present invention.

Referring now to fig 1, there is shown a solenoid valve having a hollow body 1 housing a pinch member 2 slidable therein and a pin 3; said body 1 is partially opened next to its lower end whilst said pinch member 2 is enbloc and has a pair of chambers one over the other, each having a lateral opening. The lower chamber of said pinch member 2 is further provided, besides the opening, with a slot at the shoulder opposite said opening. Therefore said pin 3 can be placed along the diameter of the body 1 passing through said slot, so as to define the bottom dead center of the stroke of said pinch member 2, the top dead center thus given by the height of said lower chamber. A tube (not shown) conveying a fluid can be, therefore, engaged between the bottom of said lower chamber within said pinch member 2 and said pin 3, at any section of the same tube. The upper chamber of said pinch member 2 has a hole at its top for the passage of a shaft connected to a plunger 4d, said plunger 4d abutting against the bottom of said upper chamber; a spring 4c, placed around said shaft, abuts with one end against the top of the upper chamber and on the other end against a washer 4b supported by an elastic ring 4a partially inserted within a groove formed almost at the end of said shaft. Said plunger 4d is slidable within a sleeve 9a at the top of which a core 9b is placed and secured by a washer 5 and a nut 6 to a coil 10 surrounding said sleeve 9a. The whole actuating unit, comprising said coil 10, sleeve 9a, core 9b and plunger 9a; is integral with a threaded plate able to mate with an internally threaded hole provided on the top end of said hollow body 1. An annular supporting plate 8 is placed on the top end of said body 1 with a space washer 7 interposed therebetween; therefore said supporting plate 8 is used to place within the hydraulic circuit said pinch solenoid valve.

When the coil is deactivated, that is any current is supplied thereto, the plunger 4d abuts against the bottom of the upper chamber and the spring 4c is partially loaded (preloading) due to its greater height at the rest position in respect of the distance between the top of the lower chamber and the washer 4a. The resulting load is transferred to the pinch member 2 in order to engage the tube and hold it in place while keeping the flow at its maximum rate.

Once the coil has been activated, the plunger 4d is attracted, due to the magnetic force generated by the current supplied, towards the core 9b and moves upwards till it reaches said core 9b: in such position the spring 4c is compressed to the maximum and the resulting load is transferred to the top of the pinch member upper chamber. Therefore the magnetic force is almost fully used to compress the spring 4c whilst the resulting spring load, which is an exactly known load, is used to close the tube section in order to stop the fluid flow. Moreover said spring 4c, if suitably dimensioned, is also able to eliminate all the unavoidable mechanical clearances which may not allow for fully closing the tube section engaged by the pinch member 2.

## Claims

1. Pinch solenoid valve comprising:
a hollow body (1) housing a pinch member (2) slidable therein,
a plunger (4d), said pinch member (2) defining an upper chamber, said upper chamber having a hole at its top for the passage of said plunger (4d),
said plunger (4d) abutting against the bottom of said upper chamber,
an elastic member (4c) placed around said plunger (4d), abutting with one end against the top of said upper chamber and the other end against a supporting member (4a, 4b) almost at the lower end of the plunger (4d).

2. The pinch solenoid valve according to claim 1, wherein said elastic member (4c) is a spring.

3. The pinch solenoid valve according to claim 1, wherein said supporting member comprises a washer (4b) supported by an elastic ring (4a).

4. The pinch solenoid valve according to claim 1, wherein the lower end of the plunger (4d) is provided with a groove for housing said supporting member (4a, 4b).

## Patentansprüche

1. Schlauchklemm-Magnetventil mit folgenden Merkmalen:
ein hohler Körper (1) nimmt ein darin gleitendes Klemmglied (2) auf;
ein Tauchkern (4d), worin das Klemmglied (2) eine obere Kammer bildet, und die obere Kammer weist eine Öffnung für den Durchgang des Tauchkerns (4d) auf;
das Tauchkern (4d) lehnt am Boden der besagten oberen Kammer;
ein federndes um das Tauchkern (4d) angeordnetes Glied (4c) lehnt mit dem einem Ende an der Decke der oberen Kammer und mit dem anderen Ende an einer Halterung (4a, 4b) etwa am unteren Ende des Tauchkerns (4d).

2. Schlauchklemm-Magnetventil nach Anspruch 1, worin das federnde Glied (4c) eine Feder ist.

3. Schlauchklemm-Magnetventil nach Anspruch 1, worin die Halterung eine von einem Ring (4a) abgestützte Scheibe (4b) aufweist.

4. Schlauchklemm-Magnetventil nach Anspruch 1, worin das untere Ende des Tauchkerns (4d) mit einer Nut für die Aufnahme der Halterung (4a, 4b) versehen ist.

## Revendications

1. Électrovanne pour pincer un tube flexible comprenant :
un corps creux (1) de logement d'un organe de pincement (2) coulissant dedans ;
un noyau mobile (4d), l'organe de pincement (2) ayant une chambre supérieure avec un trou pour le passage du dit noyau mobile (4d), lequel repose sur le fond de la chambre supérieure susdite; un élément élastique (4c) arrangé autour du noyau mobile (4d), reposant avec une extrémité sur le sommet de la chambre supérieure et avec l'autre extrémité sur un élément de support (4a, 4b) près de l'extrémité inférieure du noyau mobile (4d).

2. Électrovanne pour pincer un tube flexible selon la revendication 1, dont l'élément élastique (4c) est un ressort.

3. Électrovanne pour pincer un tube flexible selon la revendication 1, dont l'élément de support comprend une rondelle (4b) soutenue par une bague élastique (4a).

4. Électrovanne pour pincer un tube flexible selon la revendication 1, dont l'extrémité inférieure du noyau mobile (4d) est munie d'une rainure pour le logement de l'élément de support (4a, 4b).
